# EUROPEAN PATENT APPLICATION

(11) **EP 1 243 178 A1**
(43) Date of publication of application: **25.09.2002**
(21) Application number: 01107343.4
(22) Date of filing: 24.03.2001
(51) Int. Cl.: A01N 43/80, A01N 43/828, A01N 43/82

(54) **Method for protecting crops from parasitic weeds using benzothiazole derivatives**

(71) Applicant: KOGEL, KARL-HEINZ, Prof., Dr., 35457 LOLLAR (DE)
(72) Inventor: Kogel, Karl-Heinz, Prof. Dr., 35457 Lollar (DE); Buschmann, Holger, Dr., 70794 Filderstadt (DE); Baltruschat, Helmut, Dr., 55444 Schweppenhausen (DE); Sauerborn, Joachim, Prof. Dr., 35321 Laubach (DE)
(74) Representative: Sternagel, Fleischer, Godemeyer & Partner Patentanwälte

(57) **Abstract**

The invention relates to method for protecting crops from injury and infestation caused by a parasitic weed which comprises applying an effective non-phytotoxic amount of a benzothiazole derivative of formula I 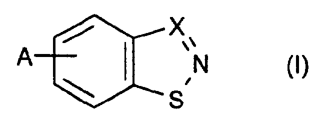 in which
A is defined in the specification and
X represents CH or N;
to the crop plant, the seed of the crop, or the soil surrounding the crop or crop seed.

## Description

### BACKGROUND OF THE INVENTION

Parasitic weed plants from the family Orobanchaceae, Scrophulariaceae, and Cuscutaceae threaten agricultural production in many parts of the world. The most damaging *Orobanche* species spread in the Mediterranean region and West Asia parasitizing important crops (Sauerbom 1991). *O. aegyptiaca* Pers. infests mainly legumes and Solanaceae such as egg plant, potato, tobacco, tomato etc. *O. crenata* Forsk. and *O. minor* Sm. parasitize preferentially grain and fodder legumes. Although *Orobanche* is distributed world-wide, crop losses are only significant in South and East Europe, in North Africa and West Asia. *Orobanche* species which limit crop production are presently reported from 58 countries. In the Mediterranean area and West Asia about 16 million ha of crop land are threatened by *Orobanche,* this is about 1.2 % of the world arable land.*Striga* is presently considered to represent the biggest single biotic constraint to food production in African agriculture.

The area infested with *Striga* has been estimated at 21 million ha in Africa. The annual yield loss caused by infestation amounts to about 4.1 million tons of grain. Altogether, grain production in Africa is potentially at risk on 44 million ha of land located in the *Striga* zone (Sauerborn 1991). This equals about 3.2% of the arable land of the world.At present, no commercially available chemical herbicide can combat *Orobanche cumana* with sufficient margin of selectivity and efficiency. The same holds true for species of the two genera *Striga* and *Alectra.* Breeding programs have revealed resistant sunflower lines but resistance is overcome once a new physiological race of *O. cumana* occurs (Encheva & Shindrova 1994).

Therefore what is needed in the art is a plant protection compound which is effective against parasitic weeds, while protecting the crop from injury and infestation.

It is known for example from US 4,931,581 or US 5,229,384 that certain benzothiadiazole derivatives have the capability to prevent healthy plants from attack by harmful microorganisms by stimulating the plants' own biological defense system. The term for the plant response on such stimulating agents is systemic acquired resistance (SAR). It is also known from EP 102 1953 to use benzothiadiazole derivatives as safener to protect crops from herbicidal injury. This potential has been shown with benzothiadiazole derivatives for safening barley against Acetyl-CoAcarboxylase (ACCase)-inhibitors such as fenoxaprop or clodinafop.

### SUMMARY OF THE INVENTION

A method for protecting crops from injury and infestation caused by a parasitic weed , which comprises applying an effective non-phytotoxic amount of a benzothiazole derivative of formula I 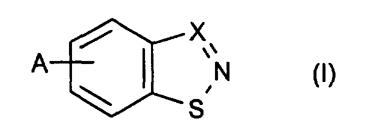 in which
A represents an alkyl, alkoxy, haloalkoxy, hydroxy, cyano or nitro group or a group of formula 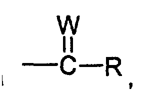 in which
   W represents O or S, and
   R represents a hydroxy, thiol, alkoxy, thioalkyl, amino, alkylamino or dialkylamino group;
X represents CH or N;
to the crop plant, the seed of the crop, or the soil surrounding the crop or crop seed.

The invention furthermore relates to seeds treated with an effective non-phytotoxic amount of a benzothiazole derivative of formula I.

Other objects and advantages of the present invention will be apparent to those skilled in the art from the following description and the appended claims.

### DETAILED DESCRIPTION OF THE PREFERRED EMBODIMENTS

The invention relates to a method for protecting crops from injury and infestation caused by a parasitic weeds which comprises applying an effective non-phytotoxic amount of a benzothiazole derivative of formula I to the crop plant, the seed of the crop, or the soil surrounding the crop or crop seed.

Benzothiazole derivatives which are suitable for use in the present invention include the compounds of formula I. Preferred benzothiazole derivatives are those compounds of formula I, wherein X represents N, and A is attached to the 7-position of the benzothiazole moiety and represents a -CO-SCH₃ group or wherein A is attached to the 4-, 5- or 6-position of the benzothiazole moiety and represents a methyl, cyano, hydroxy or difluoromethoxy group.

The benzothiadiazole derivative of formula IA 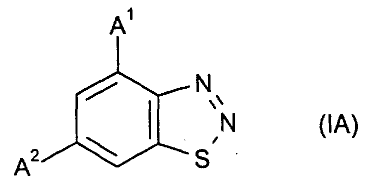 in which
A¹ represents a hydrogen atom or a C₁₋₆ fluoroalkoxy group, and
A² represents a hydrogen atom a methyl or hydroxy group; provided that only one of the groups A¹ and A² represents a hydrogen atom, have been found very effective for safening barley seeds.

Most preferred are the benzothiazoles selected from the group consisting of 4-difluoromethoxybenzo-1,2,3-thiadiazole, 5-cyanobenzo-1,2,3-thiadiazole, 6-methylbenzo-1,2,3-thiadiazole and 6-hydroxybenzo-1,2,3-thiadiazole.

Another preferred group of benzothiazoles are those compounds of formula I, wherein X represents CH, and A is attached to the 5-position of the benzothiazole moiety and represents a nitro group.

Surprisingly, it has been found that by applying certain benzothiazole derivatives of formula I to the crop plant, the seed of the crop, or the soil surrounding the crop or crop seed this crop plant is protected from injury and infestation by a parasitic weed..

Protection of crops such as corn, wheat, barley, rice, sorghum, millet, sugarcane, cowpea, groundnut, eggplant, tomato, pepper, potato, medics, alfalfa, faba bean, lentil, chickpea, pea, french bean, vetch, red clover, carrot, parsley, fennel, celery, cole, turnip, safflower, lettuce, niger seed, melon, cucumber, squash, sweet basil, sunflower, tobacco from being injured or infested by parasitic weeds may be effected by allowing said crop plants to grow until the third to early fourth leaf stage then spraying with an aqueous solution of a benzothiazole derivatives of formula I either alone or tank mixed with other plant protection compounds... Although rates will naturally vary with the crop, typical rates of application for the compound are about 0.01 kg/ha to 2.0 kg/ha.

The optimal rate for a specific application will depend on the crop(s) under cultivation and the predominant species of infesting parasitic weed species, and readily may be determined by established biological tests known to those skilled in the art.

A wide variety of troublesome parasitic weed species can also be effectively controlled in the presence of important agronomic crops such as mentioned above by treatment of the crop plants by any conventional seed treatment techniques or uniformly coating the seeds with 0.01 to 0.5 % by weight of the compound with or without usual carriers and/or additives known in the art.

A carrier according to the invention is any material with which the active ingredient is formulated to facilitate application to the locus to be treated, which may for example be a plant, seed, foliage, soil, or into the water where the plant grow, or to the roots or to facilitate storage, transport or handling. A carrier may be a solid or a liquid, including material which is normally a gas but which has been compressed to form a liquid.

The benzothiazole derivatives of formula I may be manufactured into e.g. emulsion concentrates, solutions, oil in water emulsions, wettable powders, soluble powders, suspension concentrates, dusts, granules, water dispersible granules, tablets, micro-capsules, gels and other formulation types by well-established procedures. These procedures include intensive mixing and/or milling of the active ingredients with other substances, such as fillers, solvents, solid carriers, surface active compounds (surfactants), and optionally solid and/or liquid auxilaries and/or adjuvants. The form of application such as spraying, atomizing, dispersing or pouring may be chosen like the compositions according to the desired objectives and the given circumstances.

The biological activity of the active ingredient can also be increased by including an adjuvant in the formulation or the spray dilution. An adjuvant is defined here as a substance which can increase the biological activity of an active ingredient but is not itself significantly biologically active. The adjuvant can either be included in the formulation as a coformulant or carrier, or can be added to the spray tank together with the formulation containing the active ingredient.

The benzothiazole derivatives of formula I of this invention can be applied to the plants or their environment simultaneous with or in succession with other active substances. These other active substances can be either fertilizers, agents which donate trace elements or other preparations which influence plant growth. However, they can also be other fungicides, selective herbicides, insecticides, bactericides, nematicides, algicides, molluscidides, rodenticides, virucides, compounds inducing resistance into plants, biological control agents such as viruses, bacteria, nematodes, fungi and other microorganisms, repellents of birds and animals, and plant growth regulators, or mixtures of several of these preparations, if appropriate together with other carrier substances conventionally used in the art of formulation, surfactants or other additives which promote application.

The present invention is of wide applicability in the protection of crops, trees, residential and ornamental plants against attack by parasitic weed species. Preferred crops are such as corn, wheat, barley, rice, sorghum, millet, sugarcane, cowpea, groundnut, eggplant, tomato, pepper, potato, medics, alfalfa, faba bean, lentil, chickpea, pea, french bean, vetch, red clover, carrot, parsley, fennel, celery, cole, turnip, safflower, lettuce, niger seed, melon, cucumber, squash, sweet basil, sunflower, tobacco as well as vines and apples. The duration of the protection is normally dependent on the individual compound selected, and also a variety of external factors, such as climate, whose impact is normally mitigated by the use of a suitable formulation.

The benzothiazole derivatives of formula I may be used to control any parasitic weed such as selected from the families Orobanchaceae, Scrophulariaceae, and Cuscutaceae.

The following examples further illustrate the present invention. It should be understood, however, that the invention is not limited solely to the particular examples given below.

### EXAMPLES

Sunflower plants are frequently infested by *O*. *cumana.* As a holoparasite, lacking chlorophyll, this plant is completely dependent on its host for its supply in water, minerals and assimilates. The withdrawal of water, minerals, and organic compounds can lead to complete crop failure. In the former Yugoslavia, sunflower cultivation was reduced by 37% following an *O. cumana* infestation (Mijatovic & Stojanovic 1973). Severe *Orobanche* infestation lowers not only seed yield but also the seed's oil content (Szoko 1973).

*O. cumana* is an important constraint of sunflower production in the Mediterranean basin, in Eastern Europe as well as in China (Parkier 1994) where half of the world's sunflower seeds are produced (FAO 1999). In Andalusia, Spain, the oil sunflower cropping area was assessed to be infested with *O. cumana* at 58% (Garcia Torres et al. 1994). The phytoparasite has been introduced to Eastern Asia (Liu & Li 1988) and most likely will spread further.

### Origin of plant material:

Seeds of the parasite *O. cumana* were collected in 1990 from sunflower fields in Bulgaria. Seeds of the host plant *Helianthus annuus,* variety Iregi, from Hungary were used.

### Observations on the underground stages of O. cumana in root chambers:

The effect of benzo(1,2,3)thiadiazole-7-carbothioic acid S-methyl ester (BTH) on the underground stages of *O. cumana* was evaluated in root chambers. The latter were used as described by Linke & Vogt (1987). The chambers had backs and sides made of hard plastic while the front was closed with transparent Plexiglas. The dimensions of the root chambers were 20 x 6 x 1cm (length, width, and depth). Twenty milligrams of non-preconditioned *Orobanche* seeds were spread by hand on a wet strip (26 x 6cm) of non-biodegradable micro fiber glass filter paper (Whatman GF/A). The strips were placed in pots filled with a mixture of sterilized clay and sand (2:1 volume proportion). The root chambers were stored for 7 days at room temperature under dark conditions to precondition the *O. cumana* seeds. Following this conditioning period, one sunflower seed was placed between the strip and the lid.

Sunflower seeds were pre-soaked for 36 h in BTH formulated as 50% active ingredient with a wettable powder (WP) carrier in water. Control seeds were treated with WP in water. To prevent light penetration, the chambers were wrapped in black plastic and placed at an angle so that sunflower roots had to grow near the surface of the Plexiglas plate. The experiments were placed in a glasshouse under controlled conditions where temperature ranged between 15°C (night) and 25°C (day). The day length was approximately 13 h. Supplementary light was provided from HQLR-lamps (Radium, 1000W) when required. Plants were weekly watered with 10ml of tap water. Evaluation of infestation was done by means of a binocular microscope 50 days after sunflower planting by counting the number of *Orobanche* attached to sunflower roots. Parasite and total host dry matter (shoot and roots) were assessed after drying at 80°C for 48 h. The experiments were conducted in 3 replicates for first and in 4 replicates for the second set.

### Pot trials to evaluate effect of induced resistance on O. cumana:

Local field soil was mixed with sand (1:1, v/v) to provide a loamy sand with a pH 7. Pots (12 x 12 x 18cm) were filled with 1kg of soil. Approximately 14,000 *O. cumana* seeds (50mg) with a germinability of 76% were distributed onto the soil surface of each pot. Afterwards, the pots were filled with another 750g of soil. Soil was watered with 100ml of tap water and the pots left for 7 days under greenhouse conditions in order to precondition *O. cumana* seeds. One sunflower seed was planted per pot. Subsequently, the soil was allowed to dry before irrigation to a degree that sunflower showed reversible wilting symptoms. Seeds of sunflower were pre-soaked for 36h in indicated amounts of BTH. The experiments were conducted in the glasshouse with temperature and day length as mentioned before. Evaluation of the trials started 70 days after crop emergence. After washing off the soil from sunflower roots, parasite and total host dry matter (shoot and roots) were determined and the total number of *O. cumana* shoots per pot were counted. The experimental design was a randomized complete block with 5 repetitions. Experiments were repeated twice. All data were subjected to analyses of variance using the Statistica® statistical package (1997). Significant differences in the mean values were determined by Tukeys HSD-Test at a significance level of 0.05.

### Viability assays on germinating seeds of O. cumana and H. annuus

To evaluate a possible toxic effect of BTH on germinating sunflower, seeds were spread on a filter-paper in Petri dishes and Oppm (control), 30ppm and 60ppm of BTH was added subsequently.

Seeds of *O. cumana* were spread on filter paper in Petri dishes, preconditioned and stimulated to germination by the synthetic stimulant GR24 (kindly supplied by Prof. Zwanenburg, Nijmegen, The Netherlands). After induction of germination BTH was added at 0 ppm (control), 30 ppm and 60 ppm. The dishes were stored under room temperature in the dark. The germination process and the survival rate were observed in one day intervals under a microscope for a period of 5 days.

### Chemical analysis:

For chemical analysis about 0.2 g of fresh sunflower roots were homogenized with 1 ml of MeOH (Riedel-de Haen) by means of an Ultra-Turrax. After an incubation time of 15 min the extracts were centrifuged at 13.000rpm for 2 min and the supernatant transferred into a fresh vial and stored until use at -20°C.

For high performance liquid chromatography (HPLC) a system (Dionex) combined with a diode array detector (DAD) and an analytical reversed phase column (Grom-Sil 120 ODS-5 ST; 250x4.6mm ID, 5µm, Grom Analytik + HPLC GmbH, Germany) was used. The best separation of compounds was achieved by using 0.1% aqueous trifluoroacetic acid (Merck) in a gradient of 10-100% acetonitrile (Riedel-de Haen) over 65 min and under a constant flow of 1 ml min⁻¹. The compounds were detected simultaneously at 210, 225, 280 and 350 nm. UV-absorption spectra (from 200 to 400 nm) of each compound-peak were collected by the DAD. Chlorogenic acid, caffeic acid and scopoletin were identified by comparison of retention times with reference compounds (Sigma). UV-spectroscopy and HPLC-mass spectroscopy (LC-MS) were used for verification, as described elsewhere (Buschmann et al. 2000a, Buschmann et al. 2000b).

### Gel electrophoresis and western blot analysis:

SDS-PAGE (15 % polyacrylamide) and western analysis was performed on a commercial system according to the producer's recommendation (MiniProteanll, Biorad). Proteins were transferred onto nitrocellulose filters (Schleicher & Schüll, Dassel, Germany) by electro-blotting. Immunostaining of proteins was carried out using antiserum produced against chitinase from sugar beet (provided by DANISCO, Copenhagen, Denmark) and a second antibody by means of the NBT/BCIP method. For calculating the size of the bands pre-stained SDS-PAGE standards (BenchMark prestained protein ladder, Gibco, Germany) were used.

Seeds of sunflower soaked for 36h at 20°C in water were infested by 33 and 19 *O. cumana* shoots in the first and second trial conducted in root chambers. Soaking seeds for 36h in an aqueous solution of BTH reduced the infection of *H. annuus* by *O. cumana.* BTH applied at 30 ppm reduced the rate of infection by 93%. A application of 40 and 60 ppm BTH completely prevented infection of the sunflower plants (Table 1).

As shown in Table 1, BTH seed treatment had some influence on sunflower dry matter production. Shoot as well as root dry matter decreased by 40 and 50% in the 40 ppm BTH treatment in the first and second trial, respectively. The growth reduction might be associated with the root chamber system, where sunflower was raised under soilless, i.e. rather artificial conditions.

To test these hypotheses pot trials were conducted. Again, the number of successful attachments of *O. cumana* to sunflower roots decreased in a dose-dependent manner upon BTH seed soaking (Table 2). Total number of broomrape was reduced by 84 and 95% in the 60 ppm BTH treatment in the first and second trial, respectively. The 40 ppm and 30 ppm treatment reduced the number of successful infection by 69 and 89%, respectively. In these pot experiments, sunflower shoots and roots dry matter did not differ significantly under the different treatments (Table 2) indicating that growth reduction of sunflower plant in root chamber experiments is most possibly not due to allocation costs.

To exclude the possibility that reduced infestation is due to a phytotoxic effect of BTH on the germinating *O. cumana* seeds, we performed germination tests in the presence of increasing concentrations of BTH. These tests revealed no significant reduction of germination of seeds treated with up to 60 ppm of BTH (Table 3).

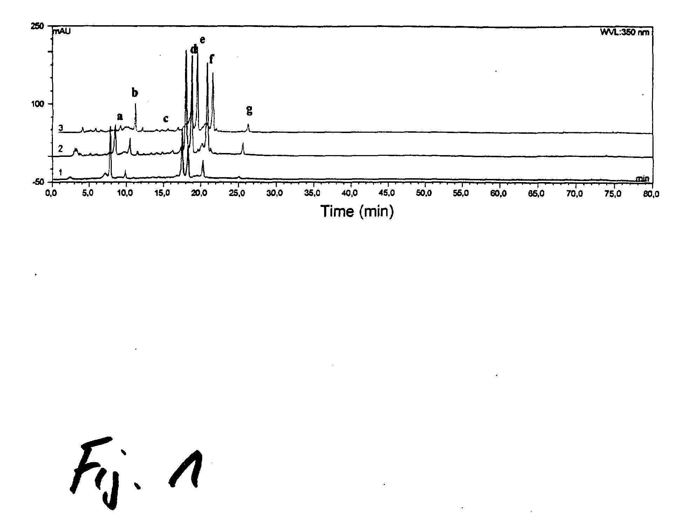

The data demonstrate that BTH does not act via a herbicidal activity but probably via induction in sunflower roots of defense responses. To strengthen these findings, we analysed BTH-induced plant defense responses with respect to accumulation of low molecular weight defense compounds and PR protein accumulation. The analysis of sunflower root extracts showed significant qualitative and quantitative differences in compound composition after BTH treatment (Figure 1). Based on our ongoing investigations, these compounds are mainly secondary metabolites belonging to the phenylpropanoid group, like chlorogenic acid, caffeic acid and scopoletin. These compounds may function in the roots as antioxidants or phytoalexins.

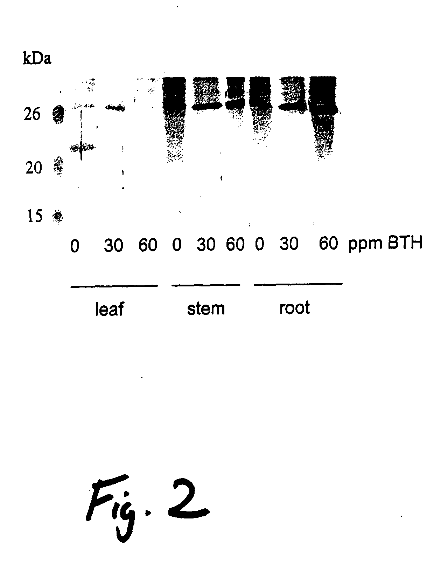

We addressed the question whether BTH treatment induce chitinase, a PR protein widely used as SAR marker in dicotyledonous plants (Sticher et al. and references therein). Total proteins were extracted from roots, stems and leaves of 10-day-old sunflower seedlings whose seeds were drenched with 30 and 60 ppm BTH, respectively. Chitinase accumulation was revealed by a chitinase specific antiserum. As shown in Fig. 2, chitinase accumulated in a dose-dependent manner in roots, stems and to a minor extent in leaves.

BTH was reported to stimulate resistance in mono- and dicotyledonous plants against a broad spectrum of viral, bacterial and fungal parasites (Görlach et al. 1996; Friedrich et al. 1996). The results presented here show for the first time induction of resistance of a crop plant against a parasitic flowering plant by means of a chemical.

### REFERENCES

BUSCHMANN, H., RODRIGUEZ, M.X., TOHME, J. AND BEECHING, J. R. 2000. Hydroxycoumarins involved in post-harvest physiological deterioration of tuberous roots of cassava (*Manihot esculenta* CRANTZ). Annals of Botany 86:1153-1160.
BUSCHMANN, H., REILLY, K., RODRIGUEZ, M.X., TOHME, J. AND BEECHING, J.R. 2000. Hydrogen peroxide and flavan-3-ols involved in post-harvest deterioration of tuberous roots of cassava (*Manihot esculenta* CRANTZ). Journal of Agricultural and Food Chemistry 48:5522-5529.
ENCHEVA, V. AND SHINDROVA, P. 1994. Broomrape (*Orobanche cumana* Wallr.) - A hindrance to sunflower production in Bulgaria. In: A.H. Pieterse, J.A.C. Verkleij & S.J. ter Borg (eds) Proc. 3^{rd} Int. Workshop on *Orobanche* and Related *Striga* Research. Royal Tropical Institute, Amsterdam, The Netherlands, 619-622.
FAO (1999) FAO Production Yearbook 1998, Vol. 52. FAO, Rome, Italy.
FRIEDRICH, L., LAWTON, K., RUESS, W., MASNER, P., SPECKER, N., GUT RELLA, M., MEIER, B., DINCHER, S., STAUB, T., UKNESS, S., MÉTRAUX J.-P., KESSMANN, H., AND RYALS, J. 1996. A benzothiadiazole derivative induces systemic acquired resistance in tobacco. Plant J. 10: 61-70.
GÖRLACH, J., VOLRATH, S., OOSTENDORP, M., KOGEL, K.-H., BECKHOVE, U., STAUB, T., WARD, E., KESSMANN, H., AND RYALS, J. 1996. Benzothiadiazole, a novel class of inducers of systemic acquired resistance, activates induced systemic resistance in wheat. Plant Cell 8:629-643.
LINKE, H.-H. AND VOGT, W. 1987. A method and its application for observing germination and early development of *Striga* (Scrophulariaceae) and *Orobanche* (Orobanchaceae). In: H. C. Weber & W. Forstreuter (eds.) Proc. 4^{th} Int. Symp. on Parasitic Flowering Plants. Phillips University, Marburg, Germany, 501-509.
LIU, L. AND LI, X. 1988. The geographical distribution of sunflower disease in China. Plant Pathology 37:470-474.
MIJATOVIC, K. AND STOJANOVIC, D. 1973. Distribution of *Orobanche* spp. on the agricultural crops in Yugoslavia. In: Proc. Int. Symp. Parastic Weeds. European Weed Research Council, Malta, 28-34.
SAUERBORN, J. 1991. Parasitic flowering plants in agricultural ecosystems of West Asia. Flora et Vegetatio Mundi IX: 83-93.
STICHER, L., MAUCH-MANI, B., AND MÉTRAUX, J.P. 1997. Systemic acquired resistance. Annu. Rev. Phytopath. 35:235-270.
SZÖKO, G. 1973. Investigations on the effect of *O. cumana* on sunflower. Acta Phytopath. Acad. Sci. Hungar. 8:375-380.

**Table 1**

| Effect of a Seed Treatment with BTH on the Infestation of Sunflower with *Orobanche cumana* and on Dry Matter in Root Chambers | | | | | |
|---|---|---|---|---|---|
| Root Chamber | BTH | Sunflower (g dry matter) | | Orobanche cumana | |
| Trial | (ppm) | Shoot | Root | Number | Dry Matter (g) |
| | 0 | 0.12 (0.03) *a1* | 0.08 (0.06) *a* | 33 (13.23) *a* | 0.02 (0.006) *a* |
| I | 40 | 0.10 (0.03) *a* | 0.02(0.01) *a* | 0 *b* | 0 *b* |
| | 60 | 0.03 (0.03) *a* | 0.01 (0.01) *a* | 0 *b* | 0 *b* |
| | 0 | 0.13 (0.04) *a* | 0.03 (0.006) *a* | 19.5 (5.92) *a* | 0.06 (0.02) *a* |
| II | 30 | 0.08 (0.05) *a* | 0.02 (0.02) *a* | 1.3 (1.26) *b* | 0.003 (0.005) *b* |
| | 40 | 0.06 (0.01) *b* | 0.02 (0.01) *a* | 0 *c* | 0 *c* |

| | | | | | |
|---|---|---|---|---|---|
| The values in parenthesis represent standard deviation ¹ Means with the same letter are not significantly different at P = 0.05 (Tukeys HSD-Test) | | | | | |

**Table 2**

| Effect of a Seed Treatment with BTH on the Infestation of Sunflower with *Orobanche cumana* and on Dry Matter in Pot Trials | | | | | |
|---|---|---|---|---|---|
| Pot Trial | BTH | Sunflower (g dry matter) | | Orobanche cumana | |
| | (ppm) | Shoot | Root | Number | Dry Matter (g) |
| | 0 | 0.56 (0.16) *a*^{*1*} | 0.16 (0.12) *a* | 28.8 (17.4) *a* | 0.15 (0.08) *a* |
| I | 40 | 0.52 (0.07) *a* | 0.16 (0.04) *a* | 9.0 (8.12) *b* | 0.07 (0.07) *a* |
| | 60 | 0.55 (0.08) a | 0.11 (0.05) *a* | 4.6 (2.97) *b* | 0.08 (0.02) *a* |
| | 0 | 0.38 (0.10) *a* | 0.09 (0.04) *a* | 9.5 (5.34) *a* | 0.03 (0.02) *a* |
| II | 40 | 0.30 (0.16) *a* | 0.12 (0.06) *a* | 1.0 (1.22) *b* | 0.02 (0.02) *a* |
| | 60 | 0.31 (0.13) *a* | 0.05 (0.05) *a* | 0.4 (0.55) *b* | 0.03 (0.05) *a* |

| | | | | | |
|---|---|---|---|---|---|
| The values in parenthesis represent standard deviation ¹ Means with the same letter are not significantly different at P = 0.05 (Tukeys HSD-Test) | | | | | |

**Table 3**

| Effects of BTH treatment on the germination of *Orobanche cumana. O. cumana* seeds were preconditioned and the germination induced by GR24 | |
|---|---|
| BTH | Orobanche cumana |
| (ppm) | germinated seeds (%) |
| 0 | 89 |
| 30 | 80 |
| 60 | 81 |

### Legends to Figures:

Figure 1: HPLC chromatograms (detection wavelength 350nm; time offset 1%) of three sunflower root extracts (var. Iregi). One (1) is based on an extract taken from roots treated with no BTH. Two (2) is based on an extract taken from roots treated with 30 ppm BTH. Three (3) is based on an extract taken from roots treated with 60ppm BTH. In all chromatograms the injected extract is derived from 0,004 g FW. The chromatograms show seven significant peaks (a = chlorogenic acid, b = caffeic acid, c = scopoletin, d, e, f, g = unknown).
Figure 2: Analysis of BTH-induced chitinase accumulation in roots, stems and leaves of sunflowers plants. Sunflower seeds were drench treated with indicated concentration of BTH, grown in pots for 14 days before harvesting. After separation by gel electrophoresis, proteins were immunostained using chitinase-specific antiserum. BTH-induced chitinase, showing up at 28 kDa, accumulated in a dose-dependent manner especially in roots and stems.

## Claims

1. A method for protecting crops from injury and infestation caused by a parasitic weed which comprises applying an effective non-phytotoxic amount of a benzothiazole derivative of formula I 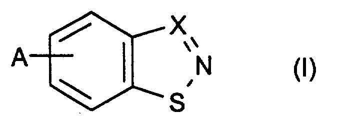 in which
A represents an alkyl, alkoxy, haloalkoxy, hydroxy, cyano or nitro group or a group of formula 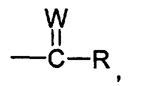 in which
W represents O or S, and
R represents a hydroxy, thiol, alkoxy, thioalkyl, amino, alkylamino or dialkylamino group;
X represents CH or N;
to the crop plant, the seed of the crop, or the soil surrounding the crop or crop seed.

2. The method according to claim 1 wherein the parasitic weed is from the families Orobancheacae, Scrophulariaceae or Cuscutaceae.

3. The method according to claim 2 wherein the parasitic weed is *Orobanche cumana.*

4. The method according to claim 2 wherein the parasitic weed is *O*. *ramosa.*

5. The method according to claim 2, wherein the parasitic weed is *Striga hermonthica,*

6. The method according to claim 2, wherein the parasitic weed is *S.asiatica*

7. The method according to claim 1, wherein X represents N, and A is attached to the 7-position of the benzothiadiazole moiety and represents a -CO-SCH₃ group.

8. The method according to claim 1, wherein X represents N, and A is attached to the 4-, 5- or 6-position of the benzothiadiazole moiety and represents a methyl, cyano, hydroxy or difluoromethoxy group.

9. The method according to claim 10, wherein the benzothiazole is selected from the group consisting of 4-difluoromethoxybenzo-1,2,3-thiadiazole, 5-cyanobenz6-1,2,3-thiadiazole, 6-methylbenzo-1,2,3-thiadiazole and 6-hydroxybenzo-1,2,3-thiadiazole.

10. The method according to claim 1, wherein X represents CH, and A is attached to the 5-position of the benzothiazole moiety and represents a nitro group.

11. The method according to claim 1, wherein the crop is sunflower, maize, sorghum, rice, barley, tobacco.

12. The method according to claim 1, wherein the benzothiazole derivative of formula I is applied to the foliage of the crop.

13. The method according to claim 1, wherein the crop is sunflower and the benzothiazole derivative of formula I is applied to the sunflower seed.

14. Seeds treated with an effective non-phytotoxic amount of a benzothiazole derivative of formula I 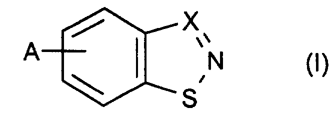 in which
A represents an alkyl, alkoxy, haloalkoxy, hydroxy, cyano or nitro group or a group of formula
in which
W represents O or S, and
R represents a hydroxy, thiol, alkoxy, thioalkyl, amino, alkylamino or dialkylamino group;
X represents CH or N.

15. Sunflower seeds treated with an effective non-phytotoxic amount a benzothiadiazole derivative of formula IA 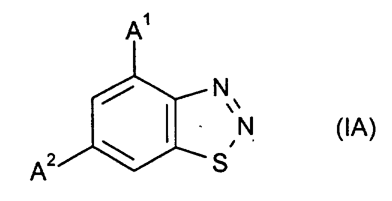 in which
A¹ represents a hydrogen atom or a C₁₋₆ fluoroalkoxy group, and
A² represents a hydrogen atom a methyl or hydroxy group; provided that only one of the groups A¹ and A² represents a hydrogen atom.
